# EUROPEAN PATENT SPECIFICATION

(11) **EP 4 009 101 B1**
(45) Date of publication and mention of the grant of the patent: **06.09.2023**
(21) Application number: 20212278.4
(22) Date of filing: 07.12.2020
(51) Int. Cl.: G03B 15/06, G03B 37/00

(54) **METHOD FOR MARKING ROTATION CENTER OF SPINDLELESS TURNTABLE, AND SPINDLELESS TURNTABLE AND LIGHT BOX USING THE SAME**
VERFAHREN ZUR MARKIERUNG DES ROTATIONSZENTRUMS EINES SPINDELLOSEN DREHTELLERS UND SPINDELLOSER DREHTELLER MIT LICHTKASTEN
PROCÉDÉ DE MARQUAGE DU CENTRE DE ROTATION D'UN PLATEAU TOURNANT SANS BROCHE ET PLATEAU TOURNANT SANS BROCHE ET BOITE À LUMIÈRE SELON LEDIT PROCÉDÉ

(43) Date of publication of application: 08.06.2022
(73) Proprietor: Ortery Technologies, Inc., New Taipei City 22052 (TW)
(72) Inventor: LAI, PENG-CHENG, 22052 New Taipei City (TW)
(74) Representative: Lermer, Christoph

(56) References cited:
- EP-A1- 2 418 539
- EP-A1- 2 952 960
- EP-B1- 2 418 539
- EP-B1- 2 952 960
- GB-A- 2 406 657
- JP-A- 2013 007 803

## Description

### FIELD OF THE INVENTION

The present invention relates to a method for marking a rotation center of a spindle-less turntable, and more particularly to a spindle-less turntable and a light box comprising a spindle-less turntable.

### DESCRIPTION OF THE RELATED ART

With the rapid development of e-commerce, there are many web design platforms support 360-degree interactive animation to improve user experience. For example, to the online auction sites, preparing a well copywriting accompanied with gorgeous pictures from various angle of views to introduce the product has become the norm. It would be much better if the seller can further provide 360-degree interactive animation to let the visitors freely rotate the virtual product to any desired angle of view for see all the detail and features. It would not only help the visitors to understand the product much better, but also significantly prevent some online shopping disputes. In order to generate a 360-degree interactive animation with a transparent background efficiently, a light box including a spindle-less turntable came into being.

The traditional spindle-less turntable is usually composed of a light transmissive spindle-less round platter and a driving mechanism leaning against the side edge of the round platter to drive it to rotate. Therefore, by using the spindle-less turntable for product photography, the users not only no need to worry about the spindle being took into the picture as usual, but also can add a bottom lamp under the round platter to eliminate the shadow formed thereon. The users can further add a back lamp behind the round platter and capture 2 pictures with the same product color and different background color by switching on and off the bottom and back lamps, then quickly remove the image background according to the background color difference to automatically generate a product image with a transparent background. It is also possible to automatically generate a 360-degree interactive animation with a transparent background by further driving the light transmissive round platter and the product to rotate. However, the rotation center of the light transmissive round platter is invisible and hard to be recognized by eyes due to its spindle-less design. Therefore, to those commercial available turntables and light boxes using a spindle-less round platter, the manufacturers usually use a fixed centering device to mark out a preset rotation center for reference.

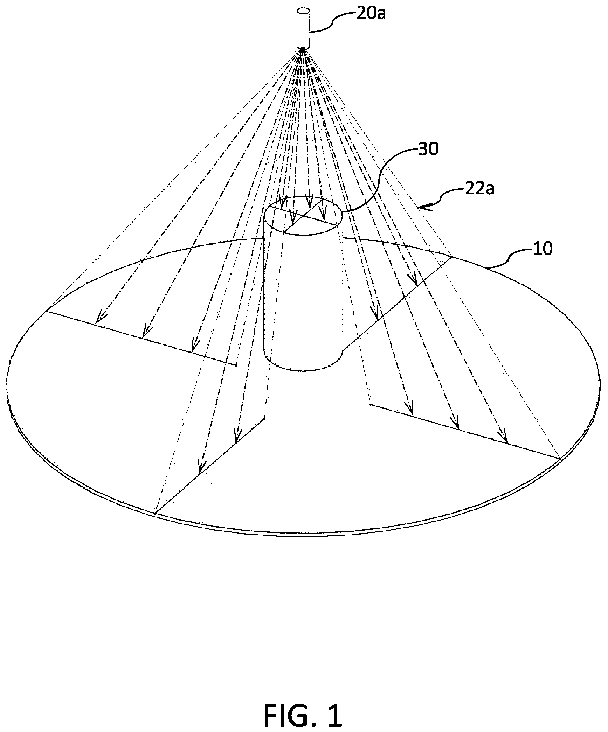

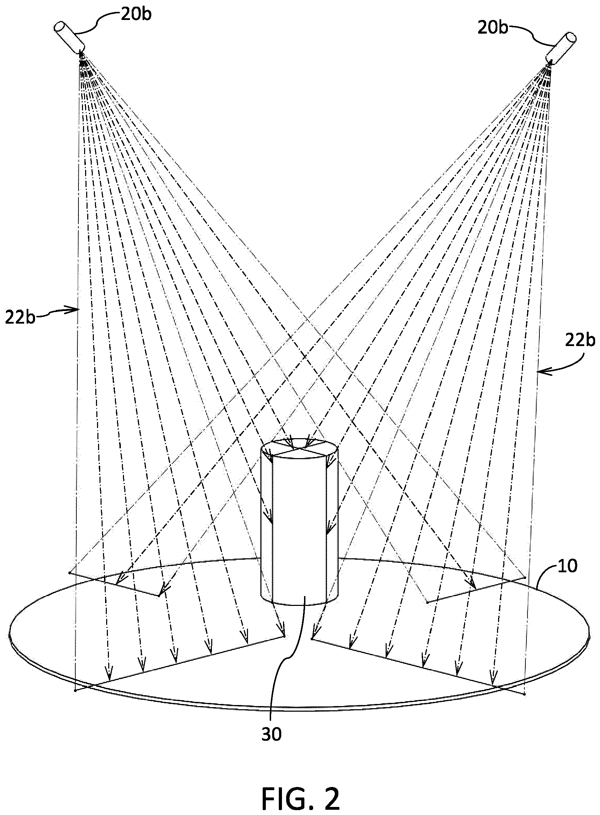

FIG. 1 and FIG. 2 respectively illustrates a schematic view of utilizing a traditional centering pointer to mark out a rotation center of a spindle-less turntable. Referring to FIG. 1, this approach uses a centering pointer 20a to emit a cross light beam 22a vertically downward onto the platter surface 10 and points a cross point of the light beam 22a onto the rotation center on the platter surface 10. However, putting a photographed object 30 onto the platter surface 10 will always block a transmission path of the light beam 22a and result in the cross point of the light beam 22a cannot point onto the platter surface 10. Referring to FIG. 2, this approach uses two centering pointers 20b to respectively emit a linear light beam 22b from an upper front side and an upper left or upper right side of the platter surface 10, and let a cross point of the light beams 22b point onto the rotation center on the platter surface 10. Similarly, putting a photographed object 30 onto the platter surface 10 will easily block a transmission path of the light beams 22b and result in the cross point of the light beams 22b cannot point onto the platter surface 10. Moreover, since a peripheral of the platter surface 10 is generally not a perfect circle due to manufacturing tolerances and its rotation center is also invisible, it would be really hard to find out the rotation center once either a relative position between the platter surface 10 and the centering pointers 20a or 20b or the loading that the driving mechanism driving the platter surface 10 to rotate is changed. Accordingly, it is desired to provide a new method to mark out an unknown rotation center of a spindle-less turntable, and also desired to provide a spindle-less turntable or a light box having the spindle-less turntable, in which the rotation center is always visible or can be easily found out.

### SUMMARY OF THE INVENTION

The present invention is directed to a method to mark a rotation center of a spindle-less turntable, so as to help the users to easily put a photographed object onto a rotation center of a platter surface.

The present invention is also directed to a spindle-less turntable or a light box having the spindle-less turntable, in which a rotation center on a platter surface is always visible or can be easily found out once a user desires to put a photographed object onto the platter surface.

The present invention provides a method for marking a rotation center of a spindle-less turntable comprising following steps: (a) displaying a preview image of a fixed shooting device on a display device, wherein the preview image at lease shows a center region of a platter surface of the spindle-less turntable and a fixture disposed on the platter surface; (b) using the spindle-less turntable to rotate the fixture, and defining a reference center in the preview image related to the rotation center according to a moving track of the fixture formed in the preview image; and (c) using at least a centering pointer to emit a light beam toward the platter surface and adjusting the centering pointer until the light beam in the preview image pointing onto the reference center.

According to an embodiment of the present invention, the fixture has at least a reference point, at least a reference line segment or a combination thereof.

According to an embodiment of the present invention, the step (b) further comprises capturing the preview image at least one time to obtain at least a captured image during the fixture is rotated, and overlapping the captured image with the preview image to form an overlapped preview image having the moving track thereon. In a specific embodiment of the present invention, the step (b) further comprises capturing the preview image to obtain a first position of the fixture related to the captured image, using the spindle-less turntable to rotate the fixture 180 degrees to obtain a second position of the fixture related to the preview image, and defining a middle point between the first position and the second position as the reference center. In another specific embodiment of the present invention, the step (b) further comprises changing a transparency of the captured image before overlapping the captured image with the preview image.

According to an embodiment of the present invention, the step (b) further comprises capturing the preview image a plurality of times to obtain a plurality of captured images during the fixture is rotated, and overlapping the captured images to form the moving track.

According to an embodiment of the present invention, the moving track is formed as a filled circle, an arc, a hollow circle or a combination thereof.

According to an embodiment of the present invention, the fixed shooting device is disposed to a side of or over the spindle-less turntable to obtain the preview image.

According to an embodiment of the present invention, the centering pointer is disposed to at least a side of the spindle-less turntable, above at least a side of the spindle-less turntable, over the spindle-less turntable or a combination thereof to emit the light beam toward the platter surface. In a specific embodiment of the present invention, the spindle-less turntable includes a base and a round platter, wherein the base has a top surface and an opening formed on the top surface, while the round platter has a platter surface and is disposed in the opening. The centering pointer is disposed on the top surface and capable of emitting a light beam toward the platter surface. In another specific embodiment of the present invention, the spindle-less turntable is disposed in a light box, while the centering pointer is disposed to a center or a side edge of a ceiling of the light box and capable of emitting a light beam toward the platter surface. In one more specific embodiment of the present invention, the spindle-less turntable is disposed in a light box, while the centering pointer is disposed to a lower or upper edge of a side cover of the light box and capable of emitting a light beam toward the platter surface.

According to an embodiment of the present invention, a cross-section of the light beam is formed as a spot, a point, a linear bar, a filled circle, a hollow circle, a polygon, a cross or a combination thereof.

The present invention further provides a spindle-less turntable capable of driving a photographed object to rotate around a rotation center of the spindle-less turntable. The spindle-less turntable comprises a round platter, a driving mechanism and at least a centering pointer. The round platter has a platter surface. The driving mechanism drives the round platter to rotate around the rotation center from an edge of the round platter. The centering pointer is disposed adjacent to the edge and capable of emitting a light beam to pass through a gap between the photographed object and the round platter and point onto the rotation center on the platter surface during putting the photographed object onto the platter surface.

According to an embodiment of the present invention, the driving mechanism comprises at least a following unit and at least a driving unit. The driving unit leans against the edge together with the following unit from different directions to drive the round platter to rotate around the rotation center.

According to an embodiment of the present invention, the driving mechanism comprises a plurality of driving units leaning against the edge from different directions to drive the round platter to rotate around the rotation center simultaneously.

According to an embodiment of the present invention, the light beam is a point light beam or a cross light beam, and either a center of the point light beam or a cross point of the cross light beam points onto the rotation center on the platter surface.

According to an embodiment of the present invention, a number of the centering pointer is plural, each of the light beams is a linear light beam, and a cross point of the linear light beams points onto the rotation center on the platter surface.

According to an embodiment of the present invention, the centering pointer is disposed adjacent to the edge by using magnetic components, fasten components, screw components or a combination thereof.

According to an embodiment of the present invention, the spindle-less turntable further comprises a base. The base has a top surface and an opening formed on the top surface. The centering pointer is disposed on the top surface. The round platter is disposed in the opening.

According to an embodiment of the present invention, the spindle-less turntable further comprises a bottom light. The round platter is a light transmissive round platter and the bottom light is disposed under the light transmissive round platter. In a specific embodiment of the present invention, the light transmissive round platter is made of translucent glass, transparent glass, translucent plastic, transparent plastic or a combination thereof.

The present invention also provides a light box comprises an above-mentioned spindle-less turntable, a base and a back light. The base has a top surface, an opening formed on the top surface and a bottom light. The centering pointer is disposed on the top surface. The round platter is a light transmissive round platter and disposed in the opening. The bottom light is disposed under the light transmissive round platter. The back light is disposed behind the round platter. In a specific embodiment of the present invention, the light box further comprises a front light disposed in front of the base, a side light disposed at a side of the base, a top light disposed over the base, or a combination thereof.

Accordingly, the centering pointer of the present invention is disposed at a side of the round platter rather than disposed straight above or above two sides of the round platter as the prior art. Therefore, it is possible to keep the light beam continuously passing through a gap between the photographed object and the round platter and pointing onto the rotation center on the platter surface, so that the user can always see the rotation center until the photographed object is put onto the platter surface, even when the photographed object is located straight above the rotation center and very close to the platter surface. Also, there is no spindle under a round platter of the spindle-less turntable and a peripheral of the platter surface is generally not a perfect circle due to manufacturing tolerances. Thus, the present invention also provides a method to direct the user to find out a real rotation center of the round platter and align the centering pointer again once the replacement or re-installation of the round platter or the driving mechanism results in the rotation center offset.

### BRIEF DESCRIPTION OF THE DRAWINGS

FIG. 1 and FIG. 2 respectively illustrates a schematic view of utilizing a traditional centering pointer to mark out a rotation center of a spindle-less turntable.
FIG. 3 illustrates a structural schematic view of a spindle-less turntable according to an embodiment of the present invention.
FIG. 4 illustrates a structural schematic view of a light box according to an embodiment of the present invention.
FIG. 5 illustrates a flow chart of a method to mark a rotation center of a spindle-less turntable according to an embodiment of the present invention.
FIG. 6 to FIG. 8 sequentially illustrate the schematic operation steps according to the method as shown in FIG. 5.
FIG. 9 and FIG. 10 represent various schematic moving tracks of the fixture formed in the preview image according to the method as shown in FIG. 5.
FIG. 11 and FIG. 12 respectively illustrates a structural schematic view of a light box according to another embodiment of the present invention.

### DETAILED DESCRIPTION OF THE INVENTION

Reference will now be made in detail to specific embodiments of the present invention. Examples of these embodiments are illustrated in the accompanying drawings. While the invention will be described in conjunction with these specific embodiments, it will be understood that it is not intended to limit the invention to these embodiments. In fact, it is intended to cover alternatives, modifications, and equivalents as may be included within the spirit and scope of the invention as defined by the appended claims. In the following description, numerous specific details are set forth in order to provide a thorough understanding of the present invention. The present invention may be practiced without some or all of these specific details. In other instances, well-known process operations are not described in detail in order not to obscure the present invention. Besides, in all of the following embodiments, the same or similar components illustrated in different embodiments refer to the same symbols.

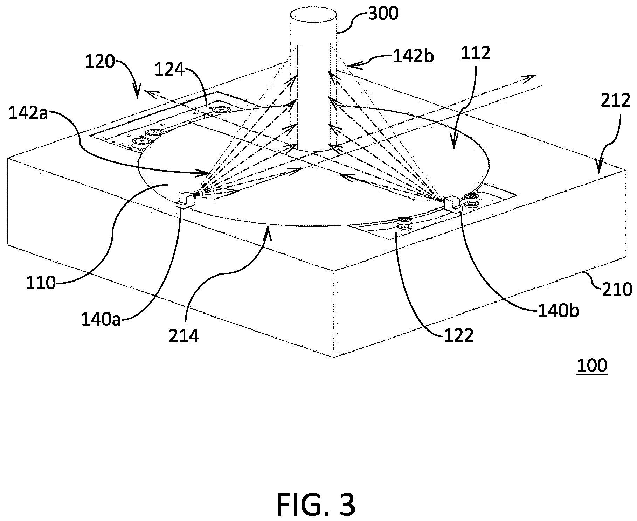

FIG. 3 illustrates a structural schematic view of a spindle-less turntable according to an embodiment of the present invention. Referring to FIG. 3, the spindle-less turntable 100 can be, for example, composed of a base 210, a round platter 110, a driving mechanism 120 and two centering pointers 140a, 140b. In the present embodiment, the base 210 can have a top surface 212 and an opening 214 form on the top surface 212. The round platter 110 can be, for example, made of translucent glass, transparent glass, translucent plastic, transparent plastic or a combination thereof, so as to form a single layer or multiple layers light transmissive round platter and can be disposed in the opening 214. There can further have an additional bottom light (not shown) disposed in the base 210 for providing uniform light under the round platter 110. Herein, the bottom light can be, for example, composed of a plurality of light emitting diode (LED) packages, light strips, light boards, light tubes or a combination thereof and can be arranged in an array.

The driving mechanism 120 can be, for example, composed of two holding parts 122 and 124 and a motor 126. Herein, the holding parts 122, 124 lean against an edge of the round platter 110 from its two opposite sides, and the motor is disposed to the holding part 122 and capable of driving the round platter 110 to rotate around a rotation center of the spindle-less turntable 100 from the edge of the round platter 110. The centering pointers 140a, 140b are, for example, both disposed on the top surface 212 and separately located at a front and a right side of the round platter 110, and capable of emitting vertical linear light beams 142a, 142b, wherein the light beams 142a, 142b can be projected onto the platter surface 112 of the round platter 110 to form a cross point coinciding with the rotation center on the platter surface 112. Moreover, in a non-illustrated embodiment, the driving mechanism can also have two motors, and each of the holding parts can have a motor. Alternatively, the driving mechanism can include at least three holding parts leaning against the edge of the round platter from different directions, and at least one of the holding parts can have a motor.

In the present embodiment, each of the centering pointers 140a, 140b can have a magnet disposed to its bottom, and at least two specific locations of the base 210 reserved for installing the centering pointers 140a, 140b can be made of a ferromagnetic material such as iron, cobalt, nickel, neodymium and so on. Therefore, not only the centering pointers 140a, 140b can be rapidly installed adjacent to the round platter 110 via magnetic force, but also the locations and the orientations of the centering pointers 140a, 140b can be easily adjusted. Alternatively, in the other embodiments, the centering pointers 140a, 140b can also be installed adjacent to the round platter 110 by using a pair of magnets or other magnetic components, a pair of a hook or a plug or a pin and a hole, a pair of buckles, a Velcro tie or strip or any other fasten components, a pair of a screw and a nut or a screw hole or an elongated hole or any other screw components, or a combination thereof.

Besides, the centering pointers 140a, 140b can be slightly higher than the platter surface 112 when they are installed adjacent to the round platter 110. As a result, the light beam 142a emitted from the centering pointer 140a will continuously project onto the front surface of the photographed object 300 and pass through a gap between the photographed object 300 and the round platter 110 to project onto the platter surface 112 until the photographed object 300 is put on the platter surface 112. Also, the light beam 142b emitted from the centering pointer 140b will continuously project onto both of the right surface of the photographed object 300 and the platter surface 112 as well, so as to form a cross point pointing onto the rotation center with the light beam 142a. Accordingly, the users can always check if the photographed object 300 is already located on the rotation center or not via the projections of the light beams 142a, 142b on the front and right surface of the photographed object 300 and the cross point on the platter surface 112 before the photographed object 300 stands on the platter surface 112 well.

Further, in a non-illustrated embodiment, the round platter can also be an opaque round platter and there is no bottom light in the base. Besides, in other non-illustrated embodiments, there is even no base in the spindle-less turntable, and the driving mechanism can be disposed to a carrying surface such as a desktop or the ground for driving the round platter to rotate over the carrying surface, and the centering pointer can be disposed to the carrying surface as well. Moreover, in some other non-illustrated embodiments, the spindle-less turntable can have only one centering pointer for emitting a point light beam, a spot light beam or a cross light beam, and a center point of the point or spot light beam and a cross point of the cross light beam can always point onto the rotation center.

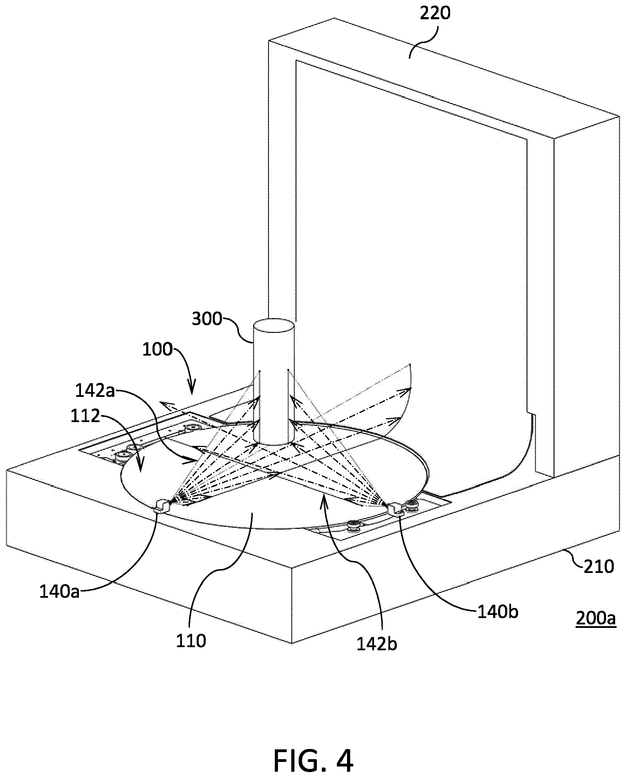

FIG. 4 illustrates a structural schematic view of a light box according to an embodiment of the present invention. Referring to FIG. 4, in a word, a light box 200a can be, for example, composed of the spindle-less turntable 100 as shown in FIG. 3 and a back light 220 disposed behind the round platter 110. Similarly, the back light 220 can be, for example, composed of a plurality of LED packages, light strips, light boards, light tubes or a combination thereof and can be arranged in an array, so as to provide uniform light from the rear side of the round platter 110 and the photographed object 300. Similar to the previous embodiment, the light beam 142a emitted from the centering pointer 140a will continuously project onto the front surface of the photographed object 300, the platter surface 112 and the back light 220, and the light beam 142b emitted from the centering pointer 140b will continuously project onto both of the right surface of the photographed object 300 and the platter surface 112 as well, so as to form a cross point pointing onto the rotation center with the light beam 142a until the photographed object 300 is put on the platter surface 112. Accordingly, the users can always check if the photographed object 300 is already located on the rotation center or not via the projections of the light beams 142a, 142b on the front and right surface of the photographed object 300 and the cross point on the platter surface 112 before the photographed object 300 stands on the platter surface 112 well.

In other non-illustrated embodiments according to the present invention, the light box can further comprise at least a front light disposed to the front side, left corner or right corner of the base, at least a side light disposed to the left or right side of the base and at least a top light disposed over the base, or a combination thereof, so as to provide uniform light from the front, left, right and/or top side of the photographed object. Similarly, the round platter and even the top cover of the base can be light transmissive, so as to provide uniform light from the bottom of the photographed object.

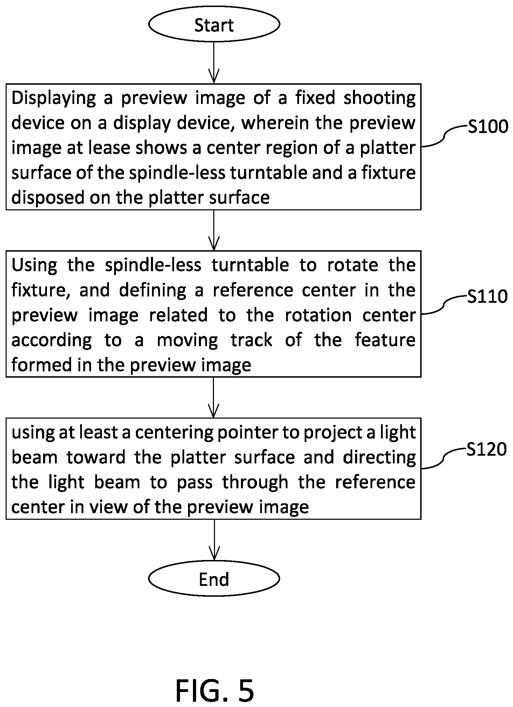

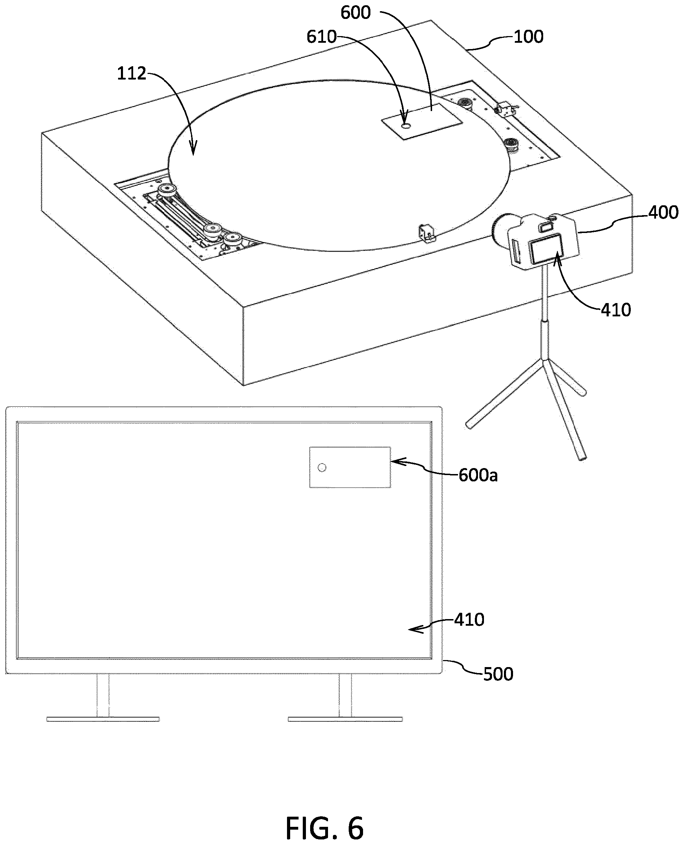

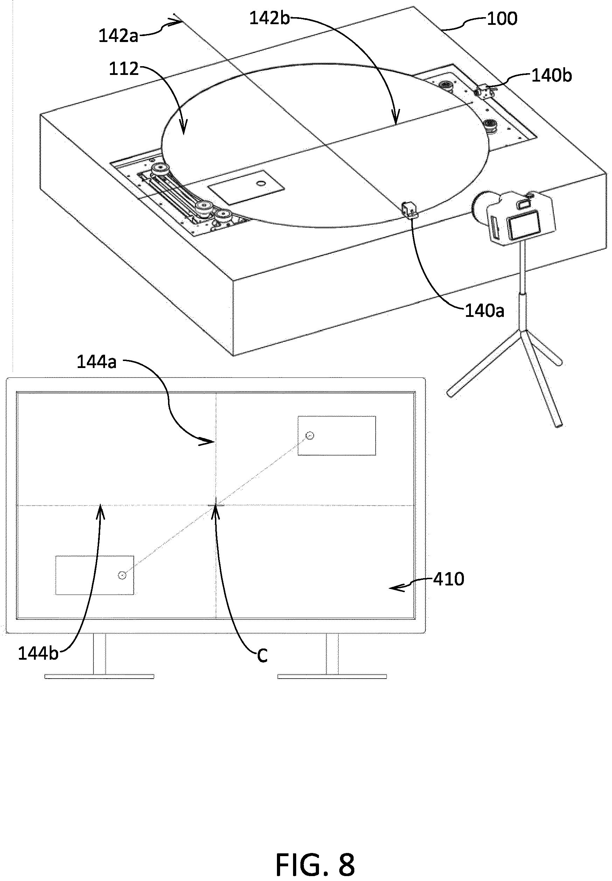

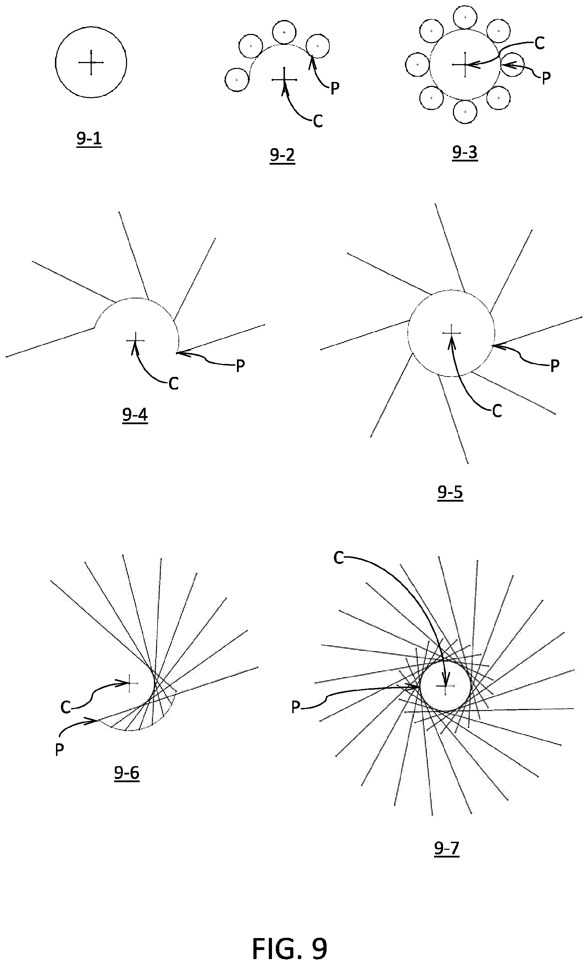

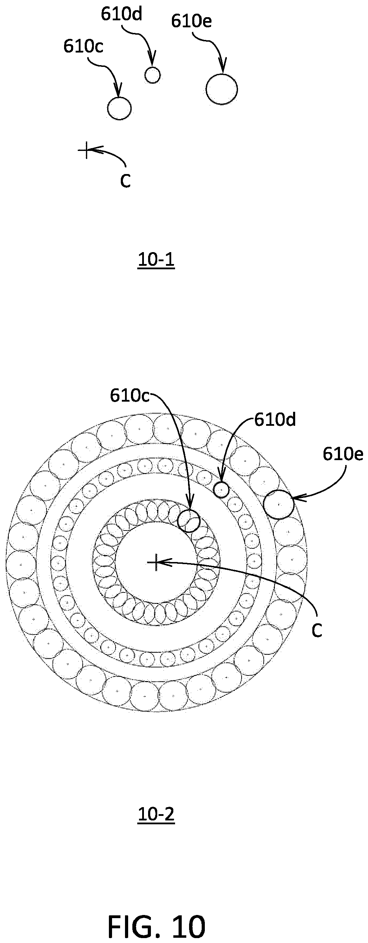

FIG. 5 illustrates a flow chart of a method to mark a rotation center of a spindle-less turntable according to an embodiment of the present invention. FIG. 6 to FIG. 8 sequentially illustrate the schematic operation steps according to the method as shown in FIG. 5. FIG. 9 and FIG. 10 represent various schematic moving tracks of the fixture formed in the preview image according to the method as shown in FIG. 5. Referring to FIG. 5 and FIG. 6 first, the method to mark a rotation center of a spindle-less turntable according to the present invention comprising following steps. First, the step S 100 is displaying a preview image 410 of a fixed shooting device 400 on a display device 500, wherein the preview image 410 at lease shows a center region of the platter surface 112 and a fixture 600 disposed on the platter surface 112.

In the present embodiment, the fixed shooting device 400 is an electronic device stably fixed next to the spindle-less turntable 100 and capable of capturing digital images, for example but not limited to, a cell phone, a tablet, a digital camera, a webcam or a digital video, and the display device 500 is, for example but not limited to, a cell phone, a tablet or a computer screen, while the fixture 600 is, for example but not limited to, a white paper printed with a reference mark 610 such as a point or a line segment. However, in other non-illustrated embodiments, the fixed shooting device can be stably fixed over the spindle-less turntable, and the display device can also be the screen of the fixed shooting device. Furthermore, the fixture can be at least a reference object in linear, filled circular, arc, hollow circular, any other geometric shape or a combination thereof, or at least a reference object having at least a mark with one of the shapes, wherein the mark can be any obvious mark or geometric feature on the fixture 600, for example but not limited to, a point, a line segment, an endpoint, an edge, a tip, a corner and so on.

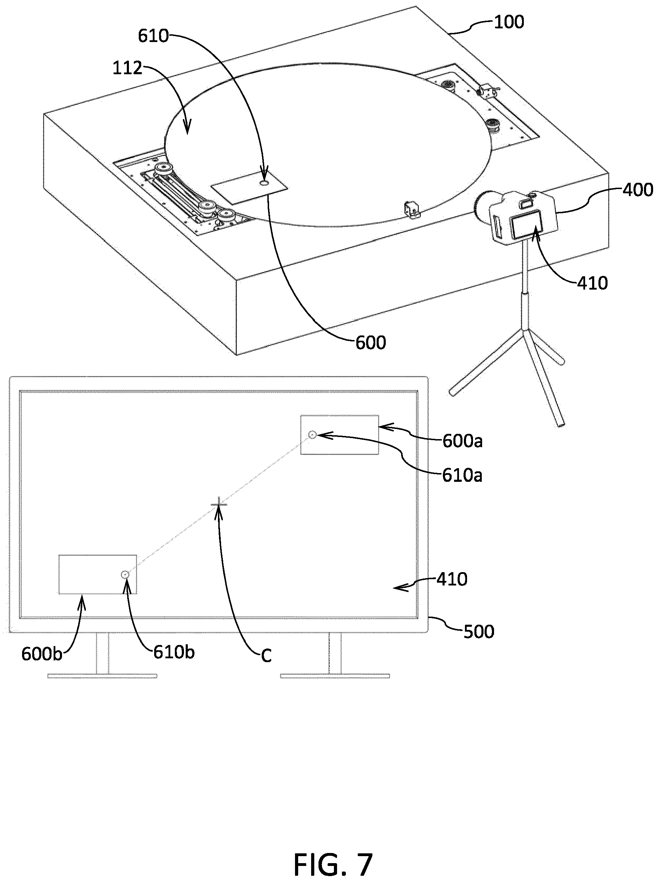

Next, referring to FIG. 5 and FIG. 7, the step S 110 is using the spindle-less turntable 100 to rotate the fixture 600, and defining a reference center C in the preview image 410 related to the rotation center according to a moving track of the fixture 600 formed in the preview image 410. In an embodiment of the present invention, the way to form the moving track of the fixture 600 in the preview image 410 is, for example but not limited to, using a computer software to capture the preview image 410 displayed on the display device 500 at least once or using the fixed shooting device 400 to at least once during the fixture 600 is rotated, so as to obtain at least a captured image. After that, overlap the captured image and the preview image 410 to form an overlapped preview image having the moving track thereon and display it on the display device 500, so as to obtain at least two fixture images with different orientations in the overlapped preview image 410. Thereafter, define the reference center C in the preview image 410 related to the rotation center according to the moving track of the fixture images in the overlapped preview image 410.

For example, the way to form the moving track of the fixture 600 in the preview image 410 is capture the preview image 410 once to obtain a captured image first. As shown in FIG. 6, the fixture image 600a is shown near the upper right corner of the display device 500. Next, referring to FIG. 7, use the spindle-less turntable 100 to rotate the fixture 600 for 180 degrees, and then overlap the captured image and the preview image 410 to form an overlapped preview image displayed on the display device 500. As shown in FIG. 7, there are two fixture images displayed on the display device 500, wherein the fixture image 600a shown near the upper right corner is related to the captured image, while the fixture image 600b shown near the lower left corner is related to the preview image 410, and a middle point between the reference marks 610a and 610b of the fixture images 600a and 600b is the reference center C in the preview image 410 related to the rotation center.

In a word, referring to FIG. 6, any reference point on the fixture image or its reference mark in the preview image 410 will be rotated around the reference center C to form various moving tracks as shown in FIG. 9 and FIG. 10 according to its radius of rotation, rotated angle, captured image number and so on since the fixture 600 will be rotated around the rotation center by the spindle-less turntable 100._{∘}

For example, to a circular reference mark having its center coinciding with the rotation center, a pattern formed from its moving track will always be a circle as shown in FIG. 9-1 no matter how many degrees it is rotated. In contrast, the reference mark can also be offset from the rotation center and rotated less than 360 degrees. In such a case, no matter the reference mark is in the shape of circular, linear or any other shape, a pattern formed from the moving track of any reference point P on it will always be an arc with an included angle the same as the rotation angle as shown in FIG. 9-2, FIG. 9-4 and FIG. 9-6. Alternatively, if the reference mark is rotated 360 degrees, a pattern formed from the moving track of any reference point P on it will be a filled or hollow circular as shown in FIG. 9-3, FIG. 9-5 and FIG. 9-7 instead.

Besides, in other non-illustrated embodiments, the reference mark can be composed of a plurality of marks or features with various shapes, and thus a pattern formed from its moving tracks can be composed of a filled circle, a hollow circle and an arc. Moreover, in some other embodiments, in order to make the preview image become more obviously among the captured images, a transparency of each captured image can be adjusted before the overlapped preview image displayed on the display device. For example, referring to FIG. 10, in an embodiment of the present invention, the fixture can also be composed of three coins with different sizes or a white paper printed with three circular reference marks, and is offset from the rotation center, so as to form three circular reference marks 610c, 610d, 610e offset from the reference center C in the preview image as shown in FIG. 10-1. Afterward, use the spindle-less turntable to rotate the fixture for 360 degrees, capture the preview image several times during the fixture is rotated, adjust the transparency of the captured images, overlap the semi-transparent captured images with the last preview image and then display the overlapped image on a display device. Then we can see that the pattern formed from the moving tracks of the circular reference marks 610c, 610d, 610e will be composed of three concentric circles around the reference center C as shown in FIG. 10-2.

After the reference center C is found out, use the centering pointers 140a, 140b to emit light beams 142a, 142b toward the platter surface 112, then move the centering pointers 140a, 140b to adjust the directions and/or orientations of the light beams 142a, 142b, so as to enable the light beam images 144a, 144b in the preview image 410 to pass through the reference center C. As a result, as long as both of the centering pointers 140a, 140b are turned on, a user can always see a cross point of the light beams 142a, 142b to point onto the rotation center on the platter surface 112 and the two vertical lines respectively to point onto the front and right side surfaces of the photographed object 300 during he puts the photographed object 300 onto the platter surface 112 as shown in FIG. 3 and FIG. 4, so as to recognize whether the photographed object 300 is align with the rotation center or not.

Note that the method as shown in FIG. 5 can be implemented to mark the rotation center of not only the spindle-less turntable 100 as shown in FIG. 6 to FIG. 8, but also a spindle-less turntable 100 in a light box 200a as shown in FIG. 4. Moreover, in some other embodiments, either the spindle-less turntable 100 or the light box 200a can include only one centering pointer disposed adjacent to the round platter and emitting a light beam having a specific visible mark always pointing onto the rotation center, herein a cross-section of the light beam can be formed as a spot, a point, a filled circle, a hollow circle, a regular polygon, a cross or a combination thereof. Alternatively, either the spindle-less turntable 100 or the light box 200a can include more than two centering pointers disposed around the round platter to respectively emit a light beam from different directions, so as to form a cross point pointing onto the rotation center on the platter surface, herein a cross-section of the light beam can be formed as a spot, a point, a linear bar, a filled circle, a hollow circle, a polygon, a cross or a combination thereof.

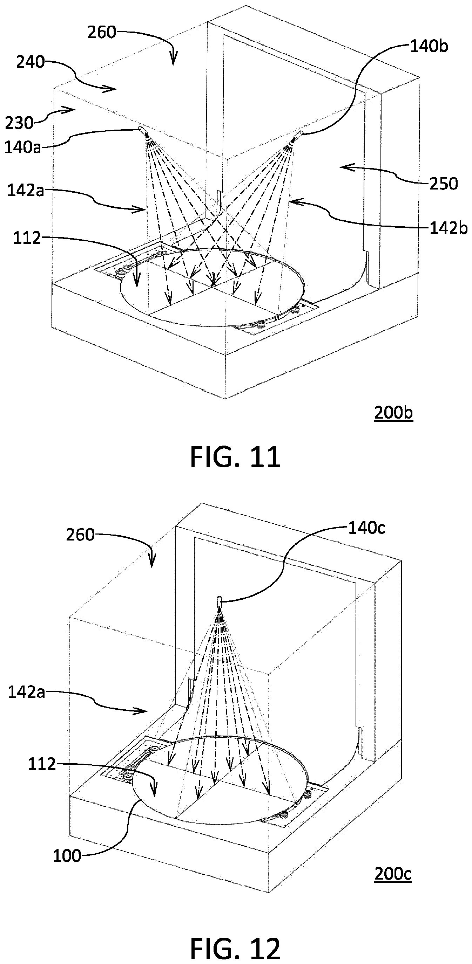

FIG. 11 and FIG. 12 respectively illustrates a structural schematic view of a light box according to another embodiment of the present invention, wherein all of the front, left, right side covers and the top cover are all drawn with dash-dotted lines to show the internal structure of the light box. In a word, the light box 200b as shown in FIG. 11 is similar to the light box 200a as shown in FIG. 4, except that the light box 200b further comprises a front side cover 230, a left side cover 240, a right side cover 250 and a top cover 260, and the centering pointers 140a, 140b are disposed to either the front and right side edges of the top cover 260 or the upper edges of the front side cover 230 and the right side cover 250 to respectively emit vertical light beams 142a, 142b from the upper front side and upper right side toward the platter surface 112. Alternatively, the centering pointers 140a, 140b can also be disposed to the lower edges of the front side cover 230 and the right side cover 250 as shown in FIG. 4, so as to respectively emit vertical light beams 142a, 142b from the lower front side and lower right side toward the platter surface 112. Similarly, in the present embodiment, the light beams 142a, 142b projected onto the platter surface 112 can form a cross point coinciding with the rotation center on the platter surface 112 as well. In addition, in contrast to the light box 200b as illustrated in FIG. 11, the light box 200c as illustrated in FIG. 12 can include only one centering pointer 140c disposed to the center of the top cover 260 straight above the spindle-less turntable 100, so as to emit a cross light beam 142c vertically downward onto the platter surface 112.

In summary, to the spindle-less turntable and the light box having the same as described in the present invention, the centering pointer is disposed at a side of the round platter rather than disposed straight above or above two sides of the round platter as the prior art. Thus, it is possible to keep the light beam continuously passing through a gap between a photographed object and the round platter and pointing onto the rotation center on the platter surface, so that the user can always see the rotation center until the photographed object is put onto the platter surface, even when the photographed object is located straight above the rotation center and very close to the platter surface. Besides, when a spindle-less turntable drives its round platter to rotate, a fixture on the round platter will undoubtedly be rotated around the invisible rotation center. Accordingly, to the method for marking the rotation center of a spindle-less turntable provided in the present invention, it is possible to simply find out the actual rotation center by observing the moving track of the fixture in the preview image during the fixture is rotated by the spindle-less turntable first, and then use the centering pointer to accurately point onto it for later reference. Further, this method can be applied to various commercial available centering pointers, and the centering pointers can be installed at various locations around the round platter as well.

Although specific embodiments of the present invention have been described, it will be understood by those of skill in the art that there are other embodiments that are equivalent to the described embodiments. Accordingly, it is to be understood that the invention is not to be limited by the specific illustrated embodiments, but only by the scope of the appended claims.

## Claims

1. A method for marking a rotation center of a spindle-less turntable(100), comprising:
(a) displaying a preview image(410) of a fixed shooting device(400) on a display device(500), wherein the preview image(410) at lease shows a center region of a platter surface(1 12) of the spindle-less turntable(100) and a fixture(600) disposed on the platter surface(1 12);
(b) using the spindle-less turntable(100) to rotate the fixture(600), and defining a reference center C in the preview image(410) related to the rotation center according to a moving track of the fixture(600) formed in the preview image(410); and
(c) using at least a centering pointer(140a)(140b)(140c) to emit a light beam toward the platter surface(112) and adjusting the centering pointer(140a)(140b)(140c) until the light beam(142a)(142b)(142c) in the preview image(410) pointing onto the reference center C.

2. The method as claimed in claim 1, wherein the fixture(600) has at least a reference point, at least a reference line segment or a combination thereof.

3. The method as claimed in claim 1, wherein the step (b) further comprises capturing the preview image(410) at least one time to obtain at least a captured image during the fixture(600) is rotated, and overlapping the captured image with the preview image(410) to form an overlapped preview image(410) having the moving track thereon.

4. The method as claimed in claim 3, wherein the step (b) comprises capturing the preview image(410) to obtain a first position of the fixture(600) related to the captured image, using the spindle-less turntable(100) to rotate the fixture(600) 180 degrees to obtain a second position of the fixture(600) related to the preview image(410), and defining a middle point between the first position and the second position as the reference center C.

5. The method as claimed in claim 3, wherein the step (b) further comprises changing a transparency of the captured image before overlapping the captured image with the preview image(410).

6. The method as claimed in claim 1, wherein the step (b) further comprises capturing the preview image(410) a plurality of times to obtain a plurality of captured images during the fixture(600) is rotated, and overlapping the captured images to form the moving track.

7. The method as claimed in claim 1, wherein the moving track is formed as a filled circle, an arc, a hollow circle or a combination thereof.

8. The method as claimed in claim 1, wherein the fixed shooting device(400) is disposed to a side of or over the spindle-less turntable(100) to obtain the preview image(410).

9. The method as claimed in claim 1, wherein the centering pointer(140a)(140b)(140c) is disposed to at least a side of the spindle-less turntable(100), above at least a side of the spindle-less turntable(100), over the spindle-less turntable(100) or a combination thereof to emit the light beam toward the platter surface(112).

10. A spindle-less turntable(100), capable of driving a photographed object(300) to rotate around a rotation center of the spindle-less turntable(100), wherein the spindle-less turntable(100) comprises:
a round platter(110), having a platter surface(1 12);
a driving mechanism(120), driving the round platter(110) to rotate around the rotation center from an edge of the round platter(1 10); and
at least a centering pointer(140a)(140b)(140c), disposed adjacent to the edge and capable of emitting a light beam to pass through a gap between the photographed object(300) and the round platter(110) and point onto the rotation center on the platter surface(1 12) during putting the photographed object(300) onto the platter surface(112).

11. The spindle-less turntable(100) as claimed in claim 10, wherein the driving mechanism(120) comprises:
at least a following unit; and
at least a driving unit, leaning against the edge together with the following unit from different directions to drive the round platter(110) to rotate around the rotation center.

12. The spindle-less turntable(100) as claimed in claim 10, wherein the driving mechanism(120) comprises a plurality of driving units leaning against the edge from different directions to drive the round platter(110) to rotate around the rotation center simultaneously.

13. The spindle-less turntable(100) as claimed in claim 10, wherein the light beam is a point light beam or a cross light beam, and either a center of the point light beam or a cross point of the cross light beam points onto the rotation center on the platter surface(1 12).

14. The spindle-less turntable(100) as claimed in claim 10, wherein a number of the centering pointer is plural, each of the light beams is a linear light beam, and a cross point of the linear light beams points onto the rotation center on the platter surface.

15. The spindle-less turntable(100) as claimed in claim 10, wherein the centering pointer(140a)(140b)(140c) is disposed adjacent to the edge by using magnetic components, fasten components, screw components or a combination thereof.

16. The spindle-less turntable(100) as claimed in claim 10, further comprising a base(210), wherein the base(210) has a top surface(212) and an opening(214) formed on the top surface(212), the centering pointer is disposed on the top surface(212), and the round platter(110) is disposed in the opening(214).

17. The spindle-less turntable(100) as claimed in claim 10, further comprising a bottom light, wherein the round platter(1 10) is a light transmissive round platter(110), and the bottom light is disposed under the light transmissive round platter(1 10).

18. The spindle-less turntable(100) as claimed in claim 17, wherein the light transmissive round platter(110) is made of translucent glass, transparent glass, translucent plastic, transparent plastic or a combination thereof.

19. A light box(200a), comprising:
the spindle-less turntable(100) as claimed in claim 10;
a base(210), having a top surface(212), an opening(214) formed on the top surface(212) and a bottom light, wherein the centering pointer is disposed on the top surface(212), the round platter(110) is a light transmissive round platter(110) and disposed in the opening(214), and the bottom light is disposed under the light transmissive round platter(1 10); and
a back light(220), disposed behind the round platter(110).

20. The light box(200a) as claimed in claim 19, further comprising a front light disposed in front of the base(210), a side light disposed at a side of the base(210), a top light disposed over the base(210), or a combination thereof.

## Patentansprüche

1. Verfahren zur Markierung eines Rotationszentrums eines spindellosen Drehtellers (100), umfassend:
(a) Anzeigen eines Vorschaubildes (410) einer feststehenden Aufnahmevorrichtung (400) auf einer Anzeigevorrichtung (500), wobei das Vorschaubild (410) wenigstens einen mittleren Bereich einer Drehtelleroberfläche (112) des spindellosen Drehtellers (100) und eine auf der Drehtelleroberfläche (112) angeordnete Vorrichtung (600) zeigt;
(b) Verwenden des spindellosen Drehtellers (100), um die Vorrichtung (600) zu drehen, und Definieren eines Referenzzentrums C in dem Vorschaubild (410) in Bezug auf das Rotationszentrum gemäß einer Bewegungsspur der Vorrichtung (600), die in dem Vorschaubild (410) gebildet ist; und
(c) Verwenden wenigstens eines Zentrierzeigers (140a) (140b) (140c), um einen Lichtstrahl in Richtung der Drehtelleroberfläche (112) zu emittieren und Einstellen des Zentrierzeigers (140a) (140b) (140c), bis der Lichtstrahl (142a) (142b) (142c) in dem Vorschaubild (410) auf den Referenzmittelpunkt C zeigt.

2. Verfahren nach Anspruch 1, wobei die Vorrichtung (600) wenigstens einen Referenzpunkt, wenigstens ein Referenzliniensegment oder eine Kombination davon umfasst.

3. Verfahren nach Anspruch 1, wobei der Schritt (b) ferner das wenigstens einmalige Erfassen des Vorschaubildes (410) umfasst, um wenigstens ein erfasstes Bild zu erhalten, während die Vorrichtung (600) gedreht wird, und das erfasste Bild mit dem Vorschaubild (410) zu überlappen, um ein überlapptes Vorschaubild (410) mit der sich bewegenden Spur darauf zu erzeugen.

4. Verfahren nach Anspruch 3, wobei der Schritt (b) das Erfassen des Vorschaubildes (410) umfasst, um eine erste Position der Vorrichtung (600) in Bezug auf das erfasste Bild zu erhalten, den spindellosen Drehteller (100) zu verwenden, um die Vorrichtung (600) um 180 Grad zu drehen, um eine zweite Position der Vorrichtung (600) in Bezug auf das Vorschaubild (410) zu erhalten, und einen Mittelpunkt zwischen der ersten Position und der zweiten Position als Referenzzentrum C zu definieren.

5. Verfahren nach Anspruch 3, wobei der Schritt (b) ferner das Ändern einer Transparenz des aufgenommenen Bildes vor dem Überlappen des aufgenommenen Bildes mit dem Vorschaubild (410) umfasst.

6. Verfahren nach Anspruch 1, wobei der Schritt (b) ferner das mehrmalige Aufnehmen des Vorschaubildes (410) umfasst, um eine Vielzahl von aufgenommenen Bildern zu erhalten, während die Vorrichtung (600) gedreht wird, und Überlappen der aufgenommenen Bilder, um die bewegte Spur zu bilden.

7. Verfahren nach Anspruch 1, wobei die sich bewegende Spur als ein ausgefüllter Kreis, ein Bogen, ein Hohlkreis oder eine Kombination davon ausgebildet ist.

8. Verfahren nach Anspruch 1, wobei die feststehende Aufnahmevorrichtung (400) seitlich von oder über dem spindellosen Drehteller (100) angeordnet ist, um das Vorschaubild (410) zu erhalten.

9. Verfahren nach Anspruch 1, wobei der Zentrierzeiger (140a) (140b) (140c) an wenigstens einer Seite des spindellosen Drehtellers (100), über wenigstens einer Seite des spindellosen Drehtellers (100), über dem spindellosen Drehtellers (100) oder einer Kombination davon angeordnet ist, um den Lichtstrahl in Richtung der Drehtelleroberfläche (112) zu emittieren.

10. Spindelloser Drehteller (100), der geeignet ist, ein fotografiertes Objekt (300) um ein Rotationszentrum des spindellosen Drehtellers (100) zu drehen, wobei der spindellose Drehteller (100) umfasst:
einen runden Drehteller (110) mit einer Drehtelleroberfläche (112);
einen Antriebsmechanismus (120), der den runden Drehteller (110) antreibt, dass er sich von einem Rand des runden Drehtellers (110) aus um das Rotationszentrum dreht; und
wenigstens einen Zentrierzeiger (140a) (140b) (140c), der neben der Kante angeordnet ist und geeignet ist, einen Lichtstrahl zu emittieren, der durch einen Spalt zwischen dem fotografierten Objekt (300) und dem runden Drehteller (110) hindurchgeht und auf das Drehzentrum auf der Drehtelleroberfläche (112) zeigt, während das fotografierte Objekt (300) auf die Drehtelleroberfläche (112) gelegt wird.

11. Spindelloser Drehteller (100) nach Anspruch 10, wobei der Antriebsmechanismus (120) umfasst:
wenigstens eine Folgeeinheit; und
wenigstens eine Antriebseinheit, die sich zusammen mit der Folgeeinheit aus verschiedenen Richtungen gegen die Kante lehnt, um den runden Drehteller (110) zur Drehung um den Drehpunkt anzutreiben.

12. Spindelloser Drehteller (100) nach Anspruch 10, wobei der Antriebsmechanismus (120) eine Vielzahl von Antriebseinheiten umfasst, die sich aus verschiedenen Richtungen gegen die Kante lehnen, um den runden Drehteller (110) gleichzeitig zur Drehung um das Drehzentrum anzutreiben.

13. Spindelloser Drehteller (100) nach Anspruch 10, wobei der Lichtstrahl ein punktförmiger Lichtstrahl oder ein gekreuzter Lichtstrahl ist, und entweder ein Zentrum des punktförmigen Lichtstrahls oder ein Kreuzungspunkt des gekreuzten Lichtstrahls auf das Rotationszentrum auf der Drehtelleroberfläche (112) zeigt.

14. Spindelloser Drehteller (100) nach Anspruch 10, wobei eine Vielzahl von Zentrierzeigern vorhanden ist, jeder der Lichtstrahlen ein linearer Lichtstrahl ist, und ein Kreuzungspunkt der linearen Lichtstrahlen auf das Rotationszentrum auf der Drehtelleroberfläche zeigt.

15. Spindelloser Drehteller (100) nach Anspruch 10, wobei der Zentrierzeiger (140a) (140b) (140c) unter Verwendung von magnetischen Komponenten, Befestigungskomponenten, Schraubenkomponenten oder einer Kombination davon, neben der Kante angeordnet ist.

16. Spindelloser Drehteller (100) nach Anspruch 10, umfassend ferner einen Sockel (210), wobei der Sockel (210) eine obere Fläche (212) und eine auf der oberen Fläche (212) ausgebildete Öffnung (214) aufweist, der Zentrierzeiger auf der oberen Fläche (212) angeordnet ist, und der runde Drehteller (110) in der Öffnung (214) angeordnet ist.

17. Spindelloser Drehteller (100) nach Anspruch 10, umfassend ferner eine Bodenleuchte, wobei der runde Drehteller (110) ein lichtdurchlässiger runder Drehteller (110) ist, und die Bodenleuchte unter dem lichtdurchlässigen runden Drehteller (110) angeordnet ist.

18. Spindelloser Drehteller (100) nach Anspruch 17, wobei der lichtdurchlässige runde Drehteller (110) aus lichtdurchlässigem Glas, transparentem Glas, lichtdurchlässigem Kunststoff, transparentem Kunststoff oder einer Kombination davon, besteht.

19. Lichtkasten (200a), umfassend:
den spindellosen Drehteller (100) nach Anspruch 10;
einen Sockel (210) mit einer oberen Fläche (212), einer auf der oberen Fläche (212) ausgebildeten Öffnung (214), und einer Bodenleuchte, wobei der Zentrierzeiger auf der oberen Fläche (212) angeordnet ist, der runde Drehteller (110) ein lichtdurchlässiger runder Drehteller (110) ist und in der Öffnung (214) angeordnet ist, und die Bodenleuchte unter dem lichtdurchlässigen runden Drehteller (110) angeordnet ist; und
eine Hintergrundbeleuchtung (220), die hinter dem runden Drehteller (110) angeordnet ist.

20. Lichtkasten (200a) nach Anspruch 19, umfassend ferner ein vorderes Licht, das vor dem Sockel (210) angeordnet ist, ein seitliches Licht, das an einer Seite des Sockels (210) angeordnet ist, ein oberes Licht, das über dem Sockel (210) angeordnet ist, oder eine Kombination davon.

## Revendications

1. Procédé de marquage du centre de rotation d'un plateau tournant sans broche (100), comprenant:
(a) afficher une image de prévisualisation (410) d'un dispositif de prise de vue fixe (400) sur un dispositif d'affichage (500), dans lequel l'image de prévisualisation (410) montre au moins une région centrale d'une surface de plateau (112) de la table tournante sans broche (100) et une fixation (600) disposée sur la surface de plateau (112);
(b) utiliser le plateau tournant sans broche (100) pour faire tourner la fixation (600), et définir un centre de référence C dans l'image de prévisualisation (410) lié au centre de rotation en fonction d'une piste mobile de l'appareil (600) formée dans l'image de prévisualisation (410) ; et
(c) en utilisant au moins un pointeur de centrage (140a) (140b) (140c)) pour émettre un faisceau lumineux vers la surface du plateau (112) et en ajustant le pointeur de centrage (140a) (140b) (140c)) jusqu'à ce que le faisceau lumineux (142a) (142b) (142c) dans l'image de prévisualisation (410) pointe sur le centre de référence C.

2. Procédé selon la revendication 1, dans laquelle la fixation (600) comporte au moins un point de référence, au moins un segment de ligne de référence ou une combinaison de ceux-ci.

3. Procédé selon la revendication 1, dans lequel l'étape (b) comprend en outre la capture de l'image de prévisualisation (410) au moins une fois pour obtenir au moins une image capturée pendant la rotation de la fixation (600), et la superposition de l'image capturée avec l'image de prévisualisation (410) pour former une image de prévisualisation superposée (410) comportant la piste mobile.

4. Procédé selon la revendication 3, dans lequel l'étape (b) comprend la capture de l'image de prévisualisation (410) pour obtenir une première position de la fixation (600) par rapport à l'image capturée, l'utilisation du plateau tournant sans broche (100) pour faire pivoter la fixation (600) de 180 degrés afin d'obtenir une deuxième position de la fixation (600) par rapport à l'image de prévisualisation (410), et la définition d'un point central entre la première position et la deuxième position en tant que centre de référence C.

5. Procédé selon la revendication 3, dans lequel l'étape (b) consiste en outre à modifier la transparence de l'image capturée avant de superposer l'image capturée avec l'image de prévisualisation (410).

6. Procédé selon la revendication 1, dans lequel l'étape (b) comprend en outre la capture de l'image de prévisualisation (410) plusieurs fois pour obtenir une pluralité d'images capturées pendant la rotation de la fixation (600), et la superposition des images capturées pour former la piste mobile.

7. Procédé selon la revendication 1, dans laquelle la piste mobile est formée d'un cercle rempli, d'un arc, d'un cercle creux ou d'une combinaison de ceux-ci.

8. Procédé selon la revendication 1, dans lequel le dispositif de prise de vue fixe (400) est disposé sur le côté ou au-dessus du plateau tournant sans broche (100) pour obtenir l'image de prévisualisation (410).

9. Procédé selon la revendication 1, dans lequel le pointeur de centrage (140a) (140b) (140c) est disposé sur au moins un côté du plateau tournant sans broche (100), au-dessus d'au moins un côté du plateau tournant sans broche (100), au-dessus du plateau tournant sans broche(100) ou une combinaison de ceux-ci pour émettre le faisceau lumineux en direction de la surface du plateau (112).

10. Plateau tournant sans broche (100), capable d'entraîner un objet photographié (300) à tourner autour d'un centre de rotation du plateau tournant sans broche (100), dans lequel le plateau tournant sans broche (100) comprend:
un plateau rond (110), avec une surface de plateau (112);
un mécanisme d'entraînement (120), entraînant le plateau rond (110) à tourner autour du centre de rotation à partir d'un bord du plateau rond (110); et
au moins un pointeur de centrage (140a) (140b) (140c), disposé à côté du bord et capable d'émettre un faisceau lumineux pour passer à travers un espace entre l'objet photographié (300) et le plateau rond (110) et pointer sur le centre de rotation sur la surface du plateau (112) lors de la mise en place de l'objet photographié (300) sur la surface du plateau (112).

11. Plateau tournant sans broche (100) selon la revendication 10, dans lequel le mécanisme d'entraînement (120) comprenant:
au moins une unité de suivi; et
au moins une unité d'entraînement, appuyée contre le bord avec l'unité de suivi depuis différentes directions pour entraîner le plateau rond (110) à tourner autour du centre de rotation.

12. Plateau tournant sans broche (100) selon la revendication 10, dans lequel le mécanisme d'entraînement (120) comprenant une pluralité d'unités d'entraînement appuyées contre le bord depuis différentes directions pour entraîner le plateau rond (110) à tourner autour du centre de rotation simultanément.

13. Plateau tournant sans broche (100) selon la revendication 10, dans lequel le faisceau lumineux est un faisceau lumineux ponctuel ou un faisceau lumineux transversal, et soit un centre du faisceau lumineux ponctuel, soit un point transversal du faisceau lumineux transversal pointe sur le centre de rotation sur la surface du plateau (112).

14. Plateau tournant sans broche (100) selon la revendication 10, dans lequel un nombre de pointeurs de centrage est pluriel, chacun des faisceaux lumineux est un faisceau lumineux linéaire, et un point de croisement des faisceaux lumineux linéaires pointe sur le centre de rotation sur la surface du plateau.

15. Plateau tournant sans broche (100) selon la revendication 10, dans lequel le pointeur de centrage (140a) (140b) (140c) est disposé à côté du bord à l'aide de composants magnétiques, de composants de fixation, de composants à vis ou d'une combinaison de ceux-ci.

16. Plateau tournant sans broche (100) selon la revendication 10, comprenant en outre une base (210), dans laquelle la base (210) a une surface supérieure (212) et une ouverture (214) formée sur la surface supérieure (212), le pointeur de centrage est disposé sur la surface supérieure (212), et le plateau rond (110) est disposé dans l'ouverture (214).

17. Plateau tournant sans broche (100) selon la revendication 10, comprenant en outre une lumière inférieure, dans laquelle le plateau rond (110) est un plateau rond transmettant la lumière (110), et la lumière inférieure est disposée sous le plateau rond transmettant la lumière (110).

18. Plateau tournant sans broche (100) selon la revendication 17, dans lequel le plateau rond transmettant la lumière (110) est fait de verre translucide, de verre transparent, de plastique translucide, de plastique transparent ou d'une combinaison de ceux-ci.

19. Boîte à lumière (200a), comprenant:
le plateau tournant sans broche (100) selon la revendication 10;
une base (210), ayant une surface supérieure (212), une ouverture (214) formée sur la surface supérieure (212) et une lumière inférieure, dans laquelle le pointeur de centrage est disposé sur la surface supérieure (212), le plateau rond (110) est un plateau rond transmettant la lumière (110) et disposé dans l'ouverture (214), et la lumière inférieure est disposée sous le plateau rond transmettant la lumière (110); et
un éclairage arrière (220), placé derrière le plateau rond (110).

20. Boîte à lumière (200a) selon la revendication 19, comprenant en outre un éclairage avant disposé devant la base (210), un éclairage latéral disposé sur un côté de la base (210), un éclairage supérieur disposé au-dessus de la base (210), ou une combinaison de ceux-ci.
